(19) Europäisches Patentamt
European Patent Office
Office européen des brevets

(11) **EP 2 508 853 A1**

(12) **EUROPEAN PATENT APPLICATION**

(43) Date of publication:
**10.10.2012 Bulletin 2012/41**

(51) Int Cl.:
***G01F 23/72*** *(2006.01)*    ***G01F 25/00*** *(2006.01)*

(21) Application number: **12163186.5**

(22) Date of filing: **04.04.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **05.04.2011 JP 2011083745**

(71) Applicant: **Hitachi Ltd.**
**Tokyo 100-8280 (JP)**

(72) Inventors:
 • **Kozaki, Tatsuro**
 **Tokyo, 100-8220 (JP)**

 • **Yatabe, Hiroshi**
 **Tokyo, 100-8220 (JP)**
 • **Hara, Isao**
 **Tokyo, 100-8220 (JP)**
 • **Akahira, Toshiro**
 **Ibaraki, 319-0316 (JP)**

(74) Representative: **MERH-IP**
**Matias Erny Reichl Hoffmann**
**Paul-Heyse-Strasse 29**
**80336 München (DE)**

(54) **Fluid level measurement instrument by using solenoid coil**

(57)    To achieve a fluid level measurement instrument requiring no detecting pipe that can accurately measure over a long period of time a fluid level in a tank for storing therein fluid without having to use a detecting pipe for sampling the fluid from the tank. A balance tube 41 has no detecting pipes and a solenoid coil 45 is wound around an outside of the balance tube 41. A float 46 containing therein a magnetic material 47 is disposed inside the solenoid coil 45. A cover 59 formed, for example, of metal covers an outer surface of the float 46 to prevent entry of fluid and hydrogen from outside. The float 46 moves according to a fluid level in the balance tube 41, which results also in inductance of the solenoid coil 45 being changed. Measuring the inductance of the solenoid coil 45 allows the fluid level of the balance tube 41 to be measured without having to use the detecting pipe.

FIG. 5

OUTSIDE BALANCE TUBE    INSIDE BALANCE TUBE

EP 2 508 853 A1

**Description**

BACKGROUND OF THE INVENTION

1. Field of the Invention

The present invention relates to a fluid level measurement instrument used in, for example, a tank for storing therein fluid.

2. Description of Related Art

A boiling-water nuclear power station, for example, includes a feed-water heater, which heats the feed water supplied to a nuclear reactor, and a tank for a moisture separator, which removes moisture from exhaust steam from the high-pressure turbine in order to heat feed water supplied to a nuclear reactor.

A level of condensate water contained in such a tank affects a heat exchange rate between a heating fluid and a heated fluid, which requires that the water level be maintained at a predetermined value. The water level in the tank is therefore measured and an opening degree of a drain valve is adjusted to thereby bring the water level to the predetermined value.

A liquid level measurement system for a tank is structured as follows. Specifically, a pipe is connected to each of a gas phase part and a liquid phase part of the tank. Each of these pipes has a distal end connected to a balance tube that stands in an upright position. A detecting pipe is connected to each of an upper portion and a lower portion of the balance tube. Each of the detecting pipes has a distal end connected to a differential pressure gauge.

The tank and the differential pressure gauge are spaced at a sufficient distance (5 to 10 m) apart from each other in order to prevent a radioactive ray emitted from a radioactive material contained in the water in the tank and a radiant heat radiated from the water at high temperatures from adversely affecting the differential pressure gauge formed of, for example, a semiconductor that is sensitive to the radioactive ray and the radiant heat.

The water contained in the feed-water heater or the moisture separator and heater may be heated to a temperature as high as 300°C. The above-described differential pressure gauge is unable to measure directly pressure of water at such a high temperature condition.

In actual applications, therefore, a thin diaphragm is used to transmit the pressure of the water to oil (e.g. a silicone oil) having a small thermal conductivity value, so that the pressure of the oil is transmitted to the differential pressure gauge. The temperature of the differential pressure gauge is thereby prevented from increasing.

Meanwhile, in the nuclear reactor, a water molecule is separated into hydrogen and oxygen by a neutron and a gamma ray that have high energy. The hydrogen and the oxygen are transported to the feed-water heater or the moisture separator and heater via the turbine. The hydrogen atom, having a small size, easily permeates the diaphragm to be thereby mixed with the oil. This may at times result in a big difference (drift) occurring between a measured water level and an actual water level.

When the difference between the actual water level and the measured water level is large, the water level control system becomes unable to bring the actual water level to the predetermined value. As a result, the feed-water heater does not operate to offer predetermined characteristics (e.g. heat exchanger effectiveness), thus collapsing heat balance of an entire plant.

In addition, if the measured water level is lower than the actual water level, water level control may act to increase the actual water level depending on conditions. This can cause the water to flow back into the turbine.

A technique disclosed in JP-2000-227203-A has silicone oil pressurized and packed in the diaphragm, thereby preventing drift by hydrogen permeation.

SUMMARY OF THE INVENTION

The technique disclosed in JP-2000-227203-A does not, however, ensure that output drift as a result of the hydrogen permeation can be limited for a long time (e.g. one year) after the installation of the water level gauge.

As a result, the water level gauge needs to be calibrated or replaced with a new one at predetermined intervals.

The differential pressure type water level gauge requires, as in the related-art technique, the detecting pipe connecting between the balance tube and the water level gauge. The detecting pipe must, however, be filled with water each time, for example, the plant is started.

A similar problem occurs in the use of the detecting pipe for detecting the level of fluid even in a system for detecting the level of a type of fluid other than water.

Specifically, the presence of the detecting pipe calls for servicing or otherwise maintaining the detecting pipe.

An object of the present invention is to achieve a fluid level measurement instrument capable of accurately measuring a fluid level of a tank containing fluid over an extended period of time without requiring a detecting pipe for sampling the fluid from the tank.

To achieve the foregoing object, an aspect of the present invention is configured as follows.

The aspect of the present invention provides a fluid level measurement instrument by using solenoid coil, comprising: a float disposed in a container for storing fluid, the float containing a magnetic material and/or having a specific gravity smaller than that of the fluid; a solenoid coil having inductance that varies according as the float moves within the container; and/or a fluid level measurement circuit for measuring inductance of the solenoid coil to thereby measure an upper surface position of the fluid in the container.

BRIEF DESCRIPTION OF THE DRAWINGS

Fig. 1 is an illustration showing a method for heating feed water to a nuclear reactor in a boiling-water nuclear power station to which the present invention is applied;

Fig. 2 is an illustration showing an internal structure of a feed-water heater 7 shown in Fig. 1;

Fig. 3 is an illustration showing a comparative example of a method for measuring a water level in a feed-water heater in an example different from the embodiment of the present invention;

Fig. 4 is an illustration showing a structure of a flange in the example shown in Fig. 3 and a hydrogen permeation phenomenon occurring inside the flange;

Fig. 5 is an illustration showing an exemplary case in which the water level in a balance tube is measured with a solenoid coil in the first embodiment of the present invention;

Fig. 6 is a graph showing inductance density of the solenoid coil at different positions in the balance tube in a height direction in the first embodiment of the present invention;

Fig. 7 is a graph showing a relationship between position of a float in the height direction of the balance tube and inductance of the solenoid coil in the first embodiment of the present invention;

Fig. 8 is an internal configuration diagram showing a water level measurement circuit that determines the water level from the inductance of the solenoid coil in the first embodiment of the present invention;

Fig. 9 is an illustration showing a modified example of the first embodiment of the present invention;

Fig. 10 is an illustration showing a solenoid coil and a float according to the second embodiment of the present invention;

Fig. 11 is an illustration showing a modified example of the second embodiment of the present invention;

Fig. 12 is a configuration diagram showing a water level measurement circuit including an inductance measurement circuit that incorporates an AC constant current source according to the third embodiment of the present invention;

Fig. 13 is an illustration showing a water level calibrating stopper employed for measurement of the water level in a tank directly with a solenoid coil in the fourth embodiment of the present invention;

Fig. 14 is an illustration showing a structure of a water level calibrating float for the tank in the fourth embodiment;

Fig. 15 is an illustration showing a configuration of an inductance measurement circuit to which a water level calibrator is added according to the fourth embodiment;

Fig. 16 is an illustration illustrating movement of the float when a water level measurement value for the tank is calibrated according to the fourth embodiment;

Fig. 17 is an illustration showing a modified example of the fourth embodiment of the present invention;

Fig. 18 is an illustration showing a water level measurement circuit according to the fifth embodiment of the present invention;

Fig. 19 is a graph showing magnetic flux density relative to a position of the solenoid coil in a height direction and a graph showing a relationship between a direct current value of the solenoid coil and a position at which a float is stationary according to the fifth embodiment of the present invention;

Fig. 20 is graphs showing changes with time in direct current to be superimposed over the solenoid coil, the position of the float, and the detected water level according to the fifth embodiment of the present invention;

Fig. 21 is an illustration showing a water level measurement circuit according to the sixth embodiment of the present invention;

Fig. 22 is an illustration showing a method for calibrating the measured water level in a tank using steam pressure according to the seventh embodiment of the present invention;

Fig. 23 is an illustration showing movement of the float in the method for calibrating the measured water level of the tank using steam pressure in the seventh embodiment;

Fig. 24 is an illustration showing a water level measurement circuit in the method for calibrating the measured water level in the tank using the steam pressure in the seventh embodiment;

Fig. 25 is an illustration showing an eighth embodiment of the present invention in which a water level calibrator is added to a water level measurement circuit; and
Fig. 26 is an illustration showing the ninth embodiment of the present invention, illustrating a method for mounting a solenoid coil on an outside and near a center of a tank.

DESCRIPTION OF THE PREFERRED EMBODIMENTS

Preferred embodiments of the present invention will be described below with reference to the accompanying drawings.
The embodiments to be described hereunder represent examples in which the present invention is applied to a fluid level gauge for measuring a fluid level in a feed-water heater in a boiling-water nuclear power station.

[Embodiments]

(First embodiment)

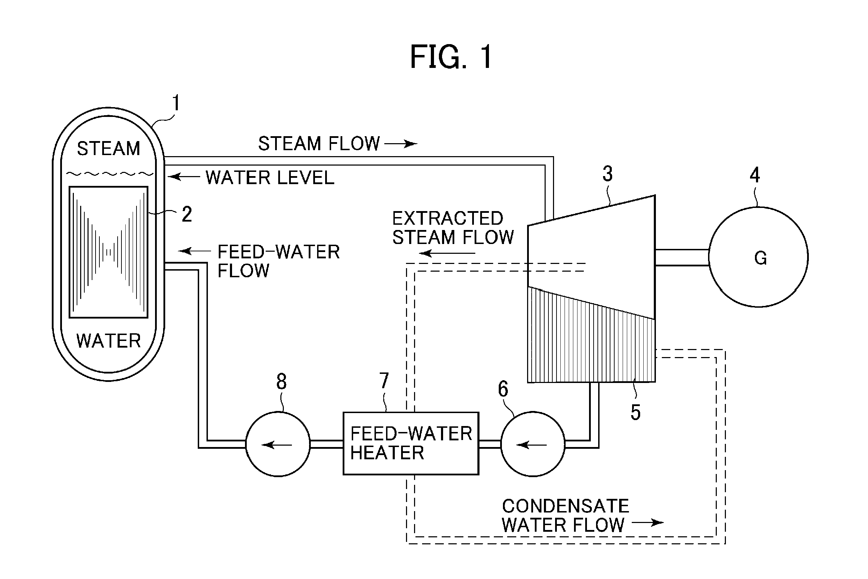

Fig. 1 is an illustration showing a method for heating feed water of a nuclear reactor 1 having a reactor core 2 in the boiling-water nuclear power station to which the present invention is applied.
Referring to Fig. 1, water poured into the nuclear reactor 1 by a feed-water pump 8 is heated and boiled in the nuclear reactor 1. Of the boiled water (two-phase flow), steam is separated from water in the nuclear reactor 1 and resultant steam only is introduced into a turbine 3.
The steam does work to drive an electric generator 4 for generating electricity in the turbine 3, which reduces energy. The steam condenses to water in a condenser 5.
The water in the condenser 5 is fed to a feed-water heater 7 by a condensate pump 6 and heated by a high-temperature steam extracted from the turbine 3 before being fed to the feed-water pump 8.

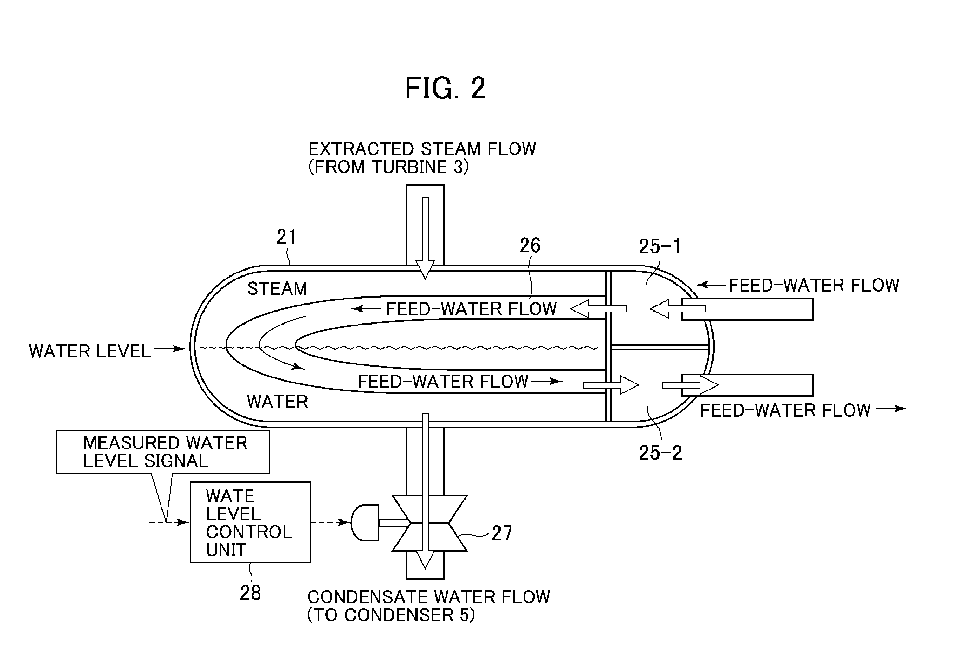

Fig. 2 is an illustration showing an internal structure of the feed-water heater 7 shown in Fig. 1.
Referring to Fig. 2, the feed-water heater 7 includes, for example, a main body (a tank 21), water chambers 25-1, 25-2, and a U-shaped heat-transfer tube 26. Feed water temporarily enters the water chamber (1) 25-1 from outside and then enters the U-shaped heat-transfer tube 26. After having been heated by extracted steam, the feed water returns to the water chamber (2) 25-2 before being fed to the outside.
Meanwhile, the extracted steam from the turbine 3 condenses to water when the feed water is heated and is accumulated in the feed-water heater 7. A level of the water is brought to a predetermined level by a water level control unit 28 that adjusts a regulator valve 27 disposed in a drain line. An operating mode of the water level control unit 28 is commanded by a general operation controller 100. The general operation controller 100 also controls operations of a water level measurement circuit to be described later.

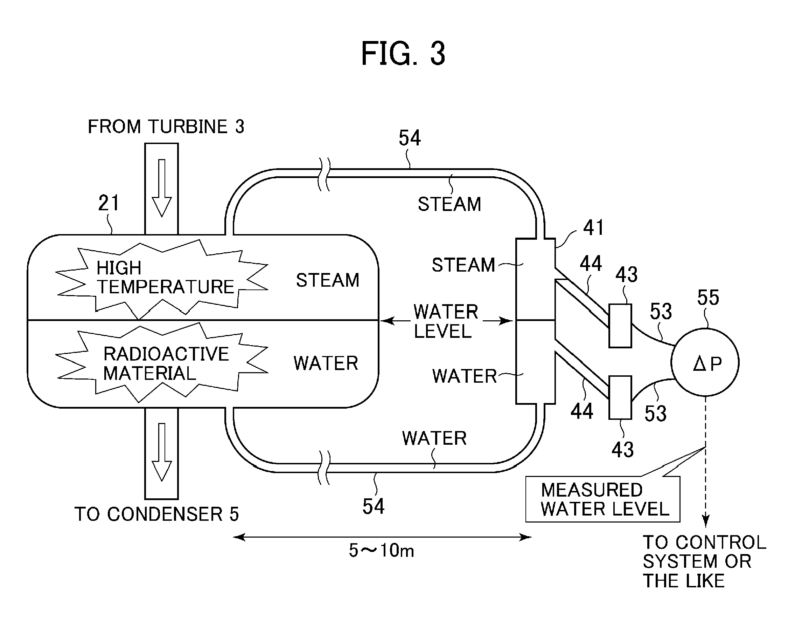

Fig. 3 illustrates a method for measuring the water level in a feed-water heater 7 in an example different from the embodiment of the present invention. Fig. 3 is given as a comparative example of the embodiment of the present invention for easier understanding of the embodiment of the present invention.
A water level measurement system different from that of the embodiment of the present invention includes a feed-water heater 7. The feed-water heater 7 includes a main body (a tank 21) to which a pipe (an instrumentation pipe 54) is connected. The instrumentation pipe 54 has a distal end to which a tube (a balance tube 41) standing in an upright position is connected. A detecting pipe 44 is connected to each of an upper portion and a lower portion of the balance tube 41. Each of the detecting pipes 44 is connected to a differential pressure gauge 55 via a flange 43 and a capillary tube 53.
A water level is formed on an inside of the balance tube 41. The differential pressure gauge 55 measures a differential pressure generated across the detecting pipe 44 of the upper portion and the detecting pipe 44 of the lower portion because of a static head involved there between. The water level in the balance tube 41 is thereby measured to thereby indirectly determine the water level in the tank 21.

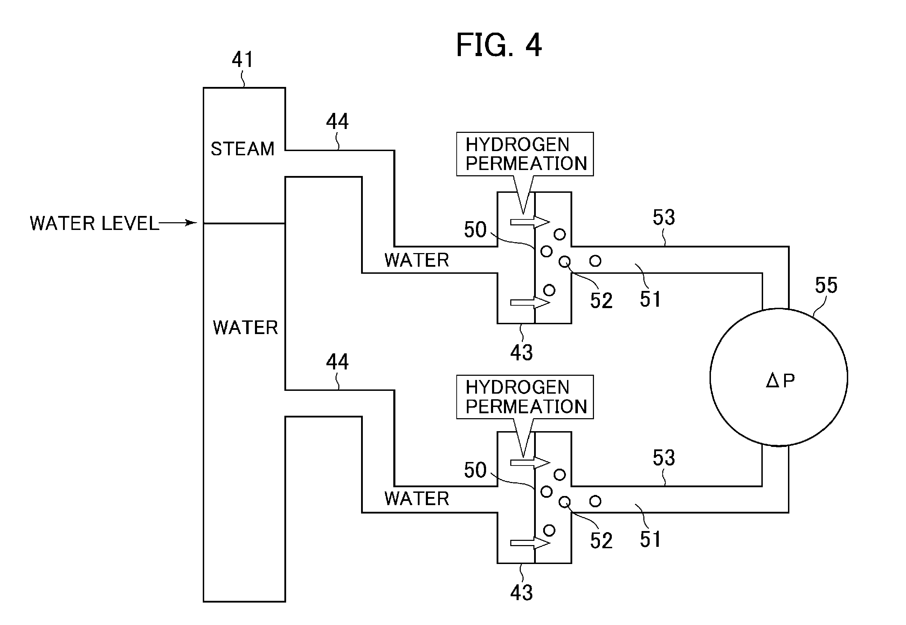

Fig. 4 illustrates a structure of the flange in the example shown in Fig. 3 and a hydrogen permeation phenomenon occurring inside the flange.
Referring to Fig. 4, the water of interest has a high temperature as described earlier, but the differential pressure gauge 55 is generally unable to withstand high temperatures. The differential pressure at the flange 43 is temporarily transmitted to silicone oil 51 having a small thermal conductivity value. The differential pressure gauge 55 then measures the differential pressure of the silicone oil 51.
The water and the silicone oil 51 are separated from each other by a membrane (about 0.1 mm thick) formed of metal capable of transmitting pressure without involving movement of water. This metal membrane is called a diaphragm 50.
Meanwhile, in a nuclear reactor 1, a water molecule is separated into hydrogen 52 and oxygen by a neutron and a gamma ray that have high energy. The hydrogen 52 and the oxygen are transported to the feed-water heater 7 or a moisture separator and heater via a turbine 3. The hydrogen atom 52, having a small size as described in JP-2000-227203-A, easily permeates the diaphragm 50 to be thereby mixed with the silicone oil 51.

This may at times result in a difference occurring between the oil pressure and the water pressure after a lapse of a given period of time (about one year) after the installation of the water level gauge. In this case, there is a big difference between a measured water level and an actual water level.

The first embodiment of the present invention will be described below.

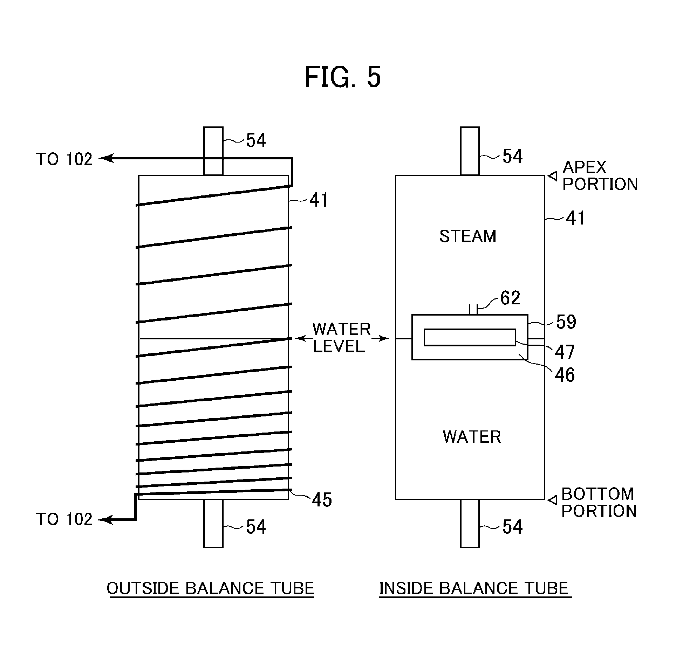

Fig. 5 illustrates how to mount a solenoid coil 45 and a float 46 for measuring the water level (upper surface position of fluid) inside a balance tube 41 using the solenoid coil 45. Fig. 5 illustrates an outside and an inside of the balance tube 41.

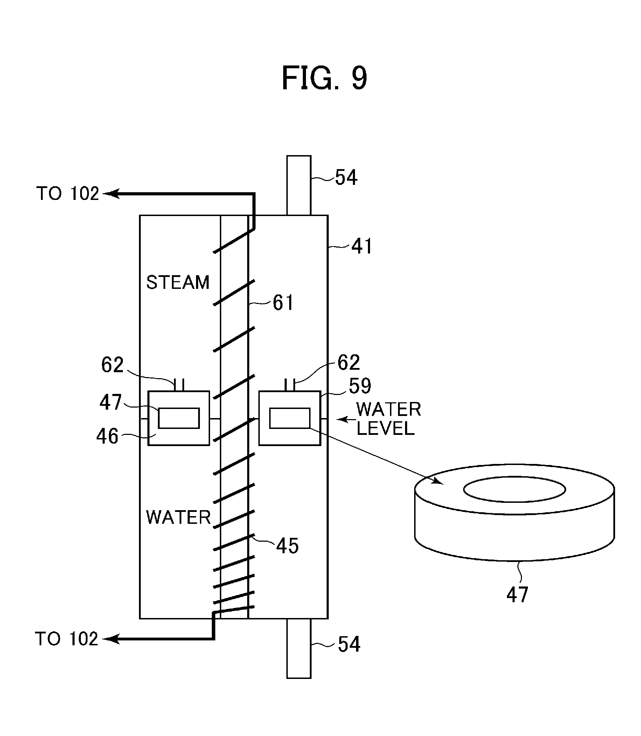

No connecting pipes 44 as those shown in Figs. 3 and 4 are connected to the balance tube 41 of the first embodiment of the present invention. The solenoid coil 45 is wound around an outer periphery of the balance tube 41. (Alternatively, a bobbin 61 (shown in Fig. 9) around which the solenoid coil 45 is wound may be disposed inside the balance tube 41.)

The float 46 that contains there inside a magnetic material 47 is disposed inside the solenoid coil 45. A cover 59 formed, for example, of metal covers an outer surface of the float 46 to prevent entry of fluid and hydrogen from outside. In addition, the water level generally changes from one moment to another, so that the float 46 can move vertically. Therefore, the float 46 is rounded in shape, having no protrusions to thereby ensure that both the float 46 and the solenoid coil 45 or the bobbin 61 will not be damaged even during collision.

The float 46 is adapted to have a specific gravity smaller than that of fluid for which the fluid level is to be measured (that is water in the first embodiment). The float 46 may be formed of, for example, foam polystyrene, or still be formed of plastic having a hollow portion.

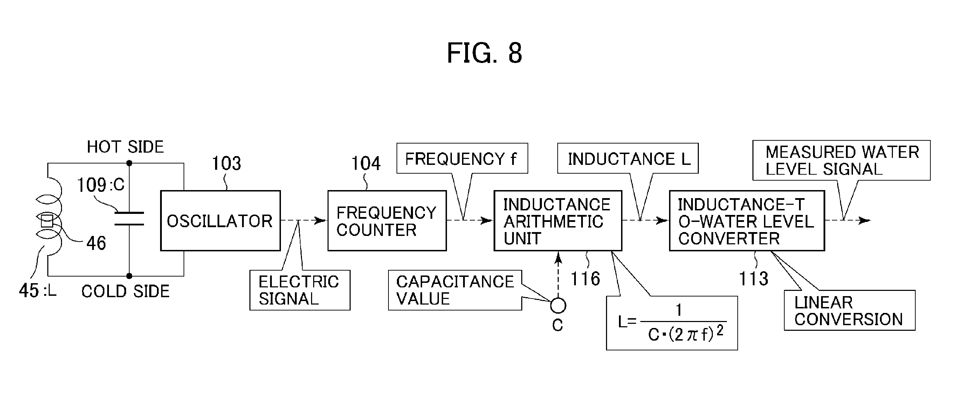

The float 46 also includes a degassing tube 62 disposed at an upper portion thereof. Should the hydrogen 52 gas enter the float 46, the degassing tube 62 allows the hydrogen 52 to be discharged outside. The solenoid coil 45 forms part of an inductance measurement circuit shown in Fig. 8.

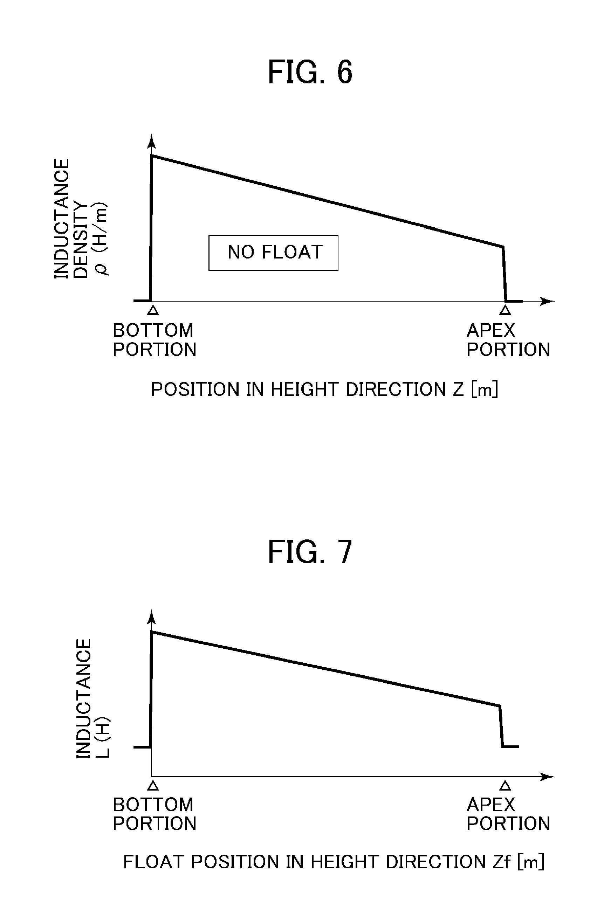

Fig. 6 shows inductance density of the solenoid coil 45 at different positions in the balance tube 41 in a height direction. In Fig. 6, the ordinate represents inductance density (H/m) and the abscissa represents positions of the solenoid coil 45 in the height direction (m).

Referring to Fig. 6, the solenoid coil 45 has inductance density that increases linearly in a direction from an apex portion toward a bottom portion of the balance tube 41.

The inductance density relative to the height direction of the solenoid coil 45 varies continuously in the height direction. The solenoid coil 45 with inductance density varying in the height direction has only to be wound with varying winding densities (number of turns per unit length) in the height direction (Z). Another possible method is to vary a radius of the solenoid coil 45 relative to the height direction.

Varying the inductance density (pi) relative to the height direction linearly as expressed by the following expression (1) will facilitate manufacturing and calibration of the instrument.

$$\rho i \equiv dL\ /\ dZ = \kappa \times Z + \lambda\ ..\ (1)$$

In the expression (1), L denotes inductance of the solenoid coil 45 and $\kappa$ and $\lambda$ denote constants determined by, for example, a geometric shape of the solenoid coil 45.

Fig. 7 illustrates a relationship between the positions (m) of the float 46 in the height direction of the balance tube 41 and inductance (H) of the solenoid coil 45.

Referring to Fig. 7, the solenoid coil 45 has inductance that increases linearly as the position of the float 46 changes from the apex portion toward the bottom portion of the balance tube 41.

If the inductance density of the solenoid coil 45 in the height direction exhibits a distribution expressed by a linear expression as shown in Fig. 6 and the expression (1), the relationship between the positions of the float 46 in the height direction and the inductance of the solenoid coil 45 is also expressed by a linear expression as shown in Fig. 7. A description of the reason for this will herein be omitted.

It is here suffice to point out that the relationship between the position of the float 46 in the height direction (Zf) and the inductance (L) of the solenoid coil 45 is expressed by the following expression (2).

$$L = \alpha \times Zf + \beta\ ..\ (2)$$

where, $\alpha$ and $\beta$ are coefficients.

Fig. 8 is an internal configuration diagram showing functions of a water level measurement circuit (fluid level measurement circuit) 101 that determines the water level from the inductance of the solenoid coil 45. An inductance measurement circuit 102 that determines the water level from the inductance of the solenoid coil 45 includes the solenoid coil 45 including the float 46, a capacitor (1) 109, and an oscillator 103, each being connected in parallel with each other.

In addition, a water level calculating section includes a frequency counter 104, an inductance arithmetic unit 116, and an inductance-to-water level converter 113. Specifically, the frequency counter 104 is supplied with an electric signal from the oscillator 103. The inductance arithmetic unit 116 is supplied with a frequency signal from the frequency counter 104. The inductance-to-water level converter 113 is supplied with a signal indicating inductance from the inductance arithmetic unit 116.

At the oscillator 103, a sine wave at a frequency (f) expressed by the following expression (3) is obtained from the inductance (L) of the solenoid coil 45 and capacitance (C) of the capacitor (1) 109.

$$\mathtt{f ~=~ 1 ~/~ (2\pi \times \sqrt{(L \times C)}) ~~ .. ~ (3)}$$

Types of the oscillator 103 include, but not limited to, a Harley type, a Colpitts type, and a Clapp type. In Fig. 8, the solenoid coil 45 and the capacitor (1) 109 are connected in parallel with each other. The solenoid coil 45 and the capacitor (1) 109 may nonetheless be connected in series with each other depending on an oscillation system employed.

The frequency counter 104 receives the electric signal output from the oscillator 103, binarizes the output signal, and measures frequency based on pulse density relative to time of the output signal (a discrete value per unit time).

The inductance arithmetic unit 116 calculates the inductance by back-calculating the above-referenced expression (3) as in the following expression (4).

$$\mathtt{L ~=~ 1 ~/~ (C \times (2\pi f)^2) ~~ .. ~ (4)}$$

where, C denotes the capacitance of the capacitor and is a constant (known).

The inductance-to-water level converter 113 calculates the measured water level (Zm) by back-calculating the expression (2) as in the following expression (5).

$$\mathtt{Zm ~=~ (L ~-~ \beta) ~/~ \alpha ~~ .. ~ (5)}$$

The water level can be measured as described above. The measured water level signal from the inductance-to-water level converter 113 is supplied to the water level control unit 28 shown in Fig. 2.

The first embodiment of the present invention, having arrangements as described above, includes no element through which the hydrogen 52 contained in the fluid being measured (water) permeates. Therefore, no problem like that noted in the related-art technique causing a measurement error (drift) occurs.

The differential pressure type of the related-art technique requires the detecting pipe for connecting between the balance tube 41 and the differential pressure gauge 55. The embodiment of the present invention does not, however, require the detecting pipe and thus does not require that the detecting pipe 44 be filled with water each time the plant is started.

In addition, the differential pressure type water level gauge of the related-art technique poses a problem in that, when pressure in the tank 21 drops at a rapid pace for some reason, the water in the detecting pipe 44 boils (flushes) and is thus reduced in volume, so that an error occurs in the measurement value for a long period of time until nearby steam condenses to fill the detecting pipe 44. The water level gauge of the first embodiment of the present invention is free of such a problem.

(Modified example of the first embodiment)

Fig. 9 illustrates a modified example of the above-described first embodiment of the present invention. Referring to Fig. 9, the modified example of the first embodiment includes a bobbin 61 disposed in an upright position inside a balance tube 41 and a solenoid coil 45 is wound around the bobbin 61. The solenoid coil 45 in the modified example is also adapted to have inductance density relative to a height direction varying continuously in the height direction with the same manner of the first embodiment of the present invention.

A float 46 containing there inside a toroidally-shaped magnetic material 47 is disposed on an outside of the solenoid coil 45.

Specifically, the bobbin 61 wound with the solenoid coil 45 is disposed in a hollow portion of the cylindrical magnetic material 47. The modified example is otherwise similarly arranged as in the first embodiment.

The same effect as that achieved by the first embodiment of the present invention can be achieved by the modified example of the first embodiment.

(Second embodiment)

A second embodiment of the present invention will be described below.

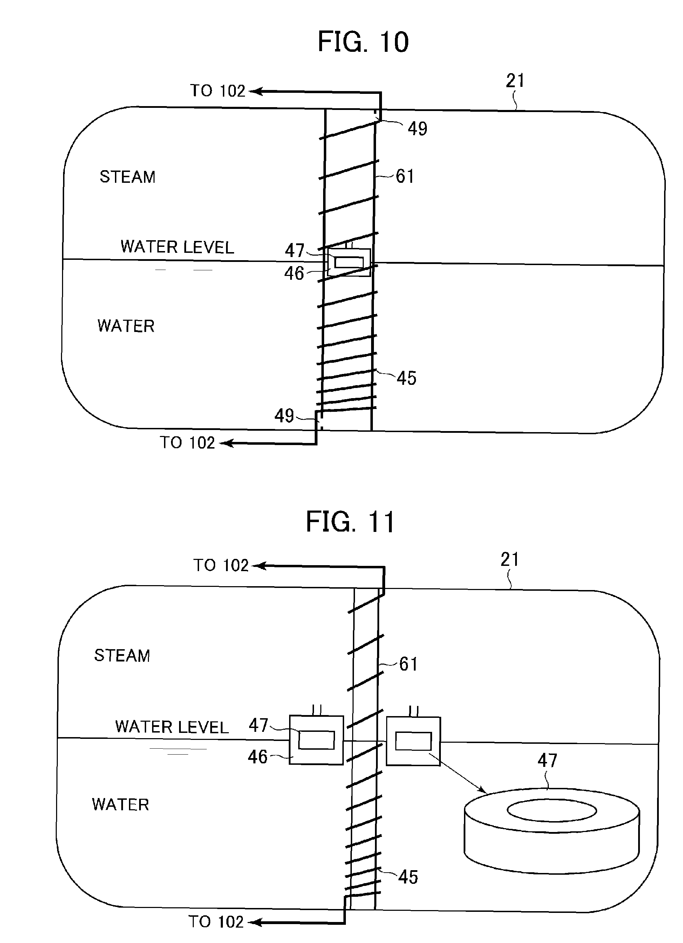

Fig. 10 illustrates a tank 21 including a solenoid coil 45 and a float 46 according to the second embodiment of the present invention in which the water level is measured directly with the solenoid coil 45. The second embodiment is otherwise arranged in the same manner as in the first embodiment and descriptions and drawing representation therefor will be omitted.

Referring to Fig. 10, in the second embodiment of the present invention, instead of disposing a solenoid coil at a balance tube, a cylindrical bobbin 61 wound with the solenoid coil 45 is disposed in an upright position inside the tank 21 for a feed-water heater 7 for which the water level is to be measured. While being fixed to the tank 21, the bobbin 61 has a vent hole 49 at each of upper and lower portions thereof to thereby allow water and steam to easily flow in and out.

The float 46 containing therein a magnetic material 47 is disposed on an inside of the bobbin 61.

In the second embodiment of the present invention, the method for determining the water level from inductance of the solenoid coil 45 is the same as that in the first embodiment of the present invention.

(Modified example of the second embodiment)

Fig. 11 illustrates a modified example of the second embodiment of the present invention, showing a tank 21 including a solenoid coil 45 and a float 46 in which the water level is measured directly with the solenoid coil 45.

Referring to Fig. 11, in the second embodiment of the present invention, the float 46 containing there inside a toroidally-shaped magnetic material 47 is installed in a bobbin 61, which is wound with the solenoid coil 45 and disposed vertically in the tank 21 for, for example, a feed-water heater 7.

In the modified example of the second embodiment of the present invention, the method for determining the water level from inductance of the solenoid coil 45 is the same as that in the first embodiment of the present invention.

The second embodiment of the present invention eliminates the need for an instrumentation pipe 54 connecting between the tank 21 and a balance tube 41, so that a situation can be avoided in which any of the instrumentation pipes 54 breaks, has a hole, or cracks.

The instrumentation pipe 54 is connected by making a hole in a wall of the tank 21. A velocity of the fluid near the connection may change, which may result in an error in measurement of the water level. The second embodiment of the present invention does not pose such a problem.

With the instrumentation pipe 54, inertia of water inside the instrumentation pipe 54 and resilience as a result of static head of water inside the balance tube 41 cause the water level in the tank 21 to vary. Even when the water level thereafter settles, persistent oscillation (U-tube oscillation) lasts in the water level in the balance tube 41 for some more time, which aggravates controllability.

In addition, if a water level detection signal for the instrumentation pipe 54 is used for controlling the water level of the tank 21 and a valve is incorporated for adjusting a flow rate of fluid flowing into or out of the tank 21, the opening degree of the valve continuously varies, which invites a worn and defective valve at early stages. The second embodiment of the present invention is, however, free from such a problem.

Furthermore, non-condensable flammable gas can flow into and accumulate, for example, inside the instrumentation pipe 54, the balance tube 41, or the detecting tube 44 and may result in explosion. This is because the water molecule is separated into the hydrogen 52 and oxygen by the neutron and the gamma ray that have high energy and the hydrogen and the oxygen are transported to the tank 21 for the feed-water heater 7 or the moisture separator and heater via the turbine 3.

The second embodiment of the present invention is, however, free from such a problem.

In addition, there is basically no flow in the water in the instrumentation pipe 54, the balance tube 41, and the detecting tube 44, so that temperature tends to lower through heat radiation and the temperature is mainly affected by surrounding temperature. If the ambient temperature changes for some reason, the temperature and specific weight (density) there inside also change. This can lead to a measurement error. The second embodiment of the present invention is, however, free from such a problem.

If pressure inside the tank 21 is higher than the outside, water may leak from the instrumentation pipe 54 (through, for example, a joint or a valve) to the outside. If the pressure inside the tank 21 is lower than the outside, and if outside air flows into the instrumentation pipe 54, the pressure inside the instrumentation pipe 54 differs from what it should be. The outside air, even if it is very small in quantity, can lead to a gross error in the measured water level. The second embodiment of the present invention is, however, free from such a problem.

When the plant is started, the tank 21 and the water level gauge are brought under radioactive ray environment. The water level is therefore calibrated immediately before the plant is started. Temperature and density of water contained in the tank 21, the instrumentation pipe 54, balance tube 41, and other parts, however, differ during the calibration from those during operation of the plant. The difference needs to be corrected, but the correction is not sufficient in terms of accuracy (because it is difficult to measure temperature during operation). The second embodiment of the present invention is, however, free from such a problem.

(Third embodiment)

A third embodiment of the present invention will be described below.

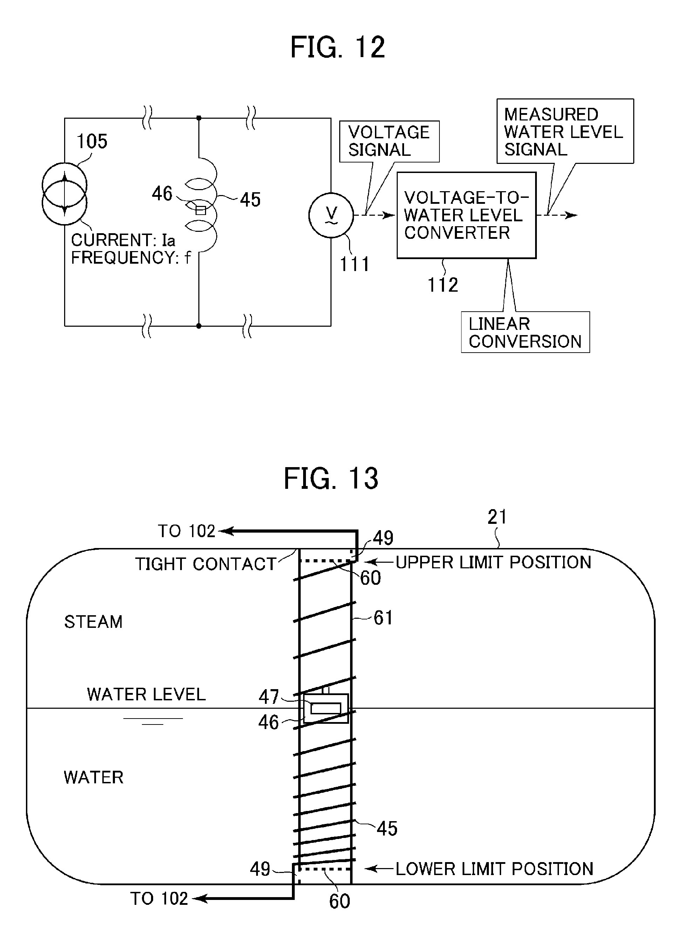

Fig. 12 illustrates an arrangement of a water level measurement circuit 101 including an inductance measurement circuit 102 that incorporates an AC constant current source 105 according to the third embodiment of the present invention. The third embodiment is otherwise arranged in the same manner as in the second embodiment.

Referring to Fig. 12, in the water level measurement circuit 101 according to the third embodiment, the AC constant current source 105 is connected in parallel with a solenoid coil 45 for use in water level measurement; a voltmeter 111 incorporating, for example, an FET and having high input resistance is used to measure a terminal voltage of the solenoid coil 45; and the measurement voltage is then converted to a corresponding water level using a voltage-to-water level converter 112. A signal of the water level obtained with the voltage-to-water level converter 112 is supplied to a water level control unit 28.

Current of the AC constant current source 105 is a sine wave and an average value of the current with respect to time is zero in a macro viewpoint. The AC constant current source 105 detects supplied current and calculates a difference between the supplied current value and a set current value to thereby perform feedback control based on the difference value. The position to detect the current is set as close as possible to the solenoid coil 45 in order to minimize a current measurement error caused by floating capacitance across hot and cold sides.

Signal processing in the water level measurement circuit 101 will be described below.

Let Ia (an effective value, known) be output current of the AC constant current source 105 and f (fixed, known) be frequency thereof. Then, the terminal voltage (V) (effective value) of the solenoid coil 45 is expressed by the following expression (6).

$$\text{V} = \text{L} \times 2\pi\text{f} \times \text{Ia} \ .. \ (6)$$

In the above expression (6), a relationship between the position (Zf) of the float 46 in the height direction and the inductance (L) of the solenoid coil 45 is as expressed in the expression (2). The voltage-to-water level converter 112 therefore calculates the water level using the following expression (7) to obtain a desired measured water level (Zm).

$$\text{Zm} = \{\text{V} \ / \ (2\pi\text{f} \times \text{Ia}) - \beta\} \ / \ \alpha$$
$$= \text{V} \ / \ (2\pi\text{f} \times \text{Ia}) \ / \ \alpha - \beta/\alpha \ .. \ (7)$$

In the above expression (7), let 1 / (2πf×Ia) / α be a constant ε and - β/α be a constant ζ, then the expression (7) may be a simple linear expression as shown in the following expression (8).

$$\text{Zm} = \text{V} \times \varepsilon + \zeta \ .. \ (8)$$

In the third embodiment, therefore, the voltage-to-water level converter 112 performs calculation of the above expression (8) as shown in Fig. 12. It is noted that, if an actual water level is known, the measured water level can be calibrated by correcting the above constants ε and ζ.

In the third embodiment, being configured as described above, a measurement error or disturbance occurring as a result of variations in floating capacitance of a cable placed between the solenoid coil 45 and means for measuring inductance found in the first and second embodiments no longer occurs.

Additionally, the third embodiment eliminates the need for an expensive frequency counter 104 required in the second embodiment.

In addition, in the second embodiment, measurement accuracy does not remain constant over a measurement range, because the circuit for calculating inductance from frequency has a nonlinear (expression (4)) input/output characteristic. Incorporating no circuit having a nonlinear characteristic, the third embodiment achieves constant measurement accuracy.

As described earlier, the tank 21 contains therein water at high temperature containing a radioactive material and a large amount of heat is radiated from the tank 21. However, the oscillator 103 in the first embodiment requires the use of an electronic device susceptible to the radioactive ray and high temperature, which requires that the solenoid coil 45 (tank 21) and the means for measuring inductance of the solenoid coil 45 be spaced apart from each other. In this case, however, the floating capacitance across the hot and cold sides of the cable placed between the solenoid coil 45 and the means for measuring the inductance (that can extend up to several tens of meters) may vary as caused by mechanical displacement or oscillation. This can be a cause of a measurement error or disturbance in the measurement of the inductance or the water level.

In the third embodiment of the present invention, such a problem does not occur.

The third embodiment of the present invention incorporates the constant current source and the high input resistance voltmeter as described above. This eliminates an effect of contact resistance involved in, for example, a connector or a terminal that is required to be disposed between the current source and the coil, or between the coil and the voltmeter.

(Fourth embodiment)

A fourth embodiment of the present invention will be described below.

Fig. 13 illustrates a water level calibrating stopper employed for measurement of the water level of a tank 21 directly with a solenoid coil 45 in the fourth embodiment of the present invention.

Referring to Fig. 13, the arrangement of water level measurement for the tank 21 in the fourth embodiment of the present invention is basically the same as that for the second embodiment. The arrangement according to the fourth embodiment, however, incorporates stoppers 60 that may, for example, be nets for limiting upward or downward movement of a float 46. The stoppers 60 are disposed on an inside of each of an upper portion and a lower portion (near upper and lower limits of a water level measurement range) of the solenoid coil 45 and prevents the float 46 from moving further upward or downward of the stopper 60.

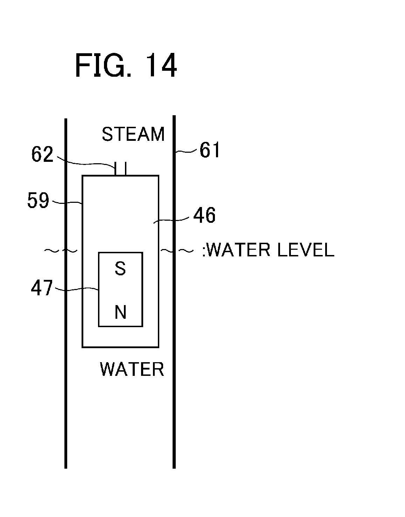

Fig. 14 illustrates a structure of the water level calibrating float 46 for the tank 21 in the fourth embodiment.

Referring to Fig. 14, the float 46 in the fourth embodiment contains there inside magnetized magnetic material 47, specifically, a magnet 48 having a vertical magnetic pole direction. To prevent orientation of the float 46 from being changed by an external force, the magnet 48 is disposed at a lower portion of the float 46 to thereby lower a center of gravity of the float 46. In addition, the float 46 has an outside diameter close to an inside diameter of a bobbin 61.

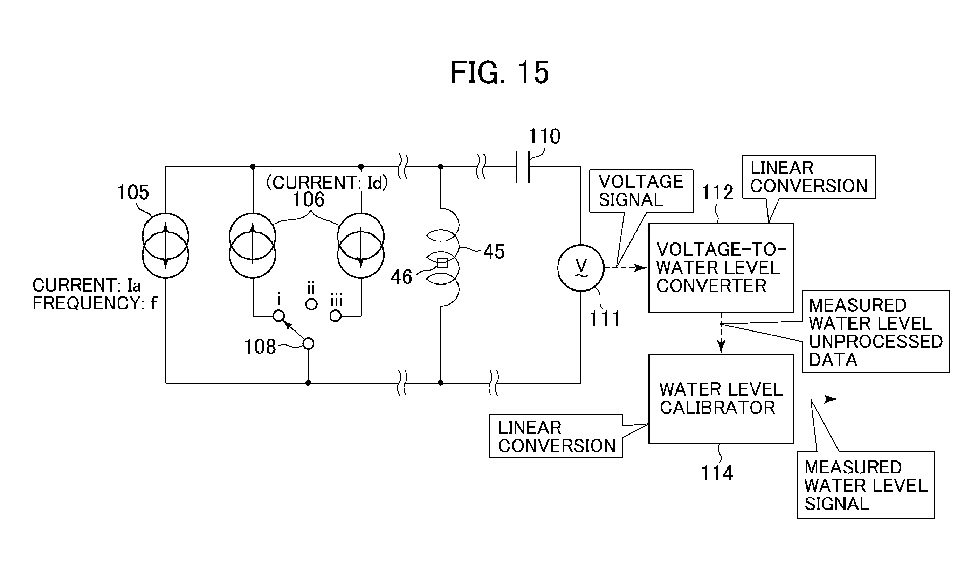

Fig. 15 illustrates a configuration of an inductance measurement circuit 102 incorporating an AC constant current source 105, to which a water level calibrator (1) 114 is added, according to the fourth embodiment.

Referring to Fig. 15, in a water level measurement circuit 101 according to the fourth embodiment, a DC constant current source 106 having positive and negative polarities is connected in series with the AC constant current source 105 relative to the water level measurement circuit 101 in the third embodiment. The polarity of the DC constant current source 106 is changed over by a switch 108. Specifically, a positive direct current is superimposed with the switch 108 at position i, a negative direct current is superimposed with the switch 108 at position iii, and no direct current is superimposed with the switch 108 at position ii. The position of the switch 108 is changed by a corresponding command signal from the general operation controller 100 or a central control unit (not shown) of the plant.

Because the direct current flows through the solenoid coil 45 as described above, a capacitor (2) 110 for cutting a DC component is inserted between the solenoid coil 45 and an AC voltmeter 111.

In addition, the water level calibrator (1) 114 is added to a subsequent stage of a voltage-to-water level converter 112. The water level calibrator (1) 114 supplies a water level control unit 28 with a measured water level signal.

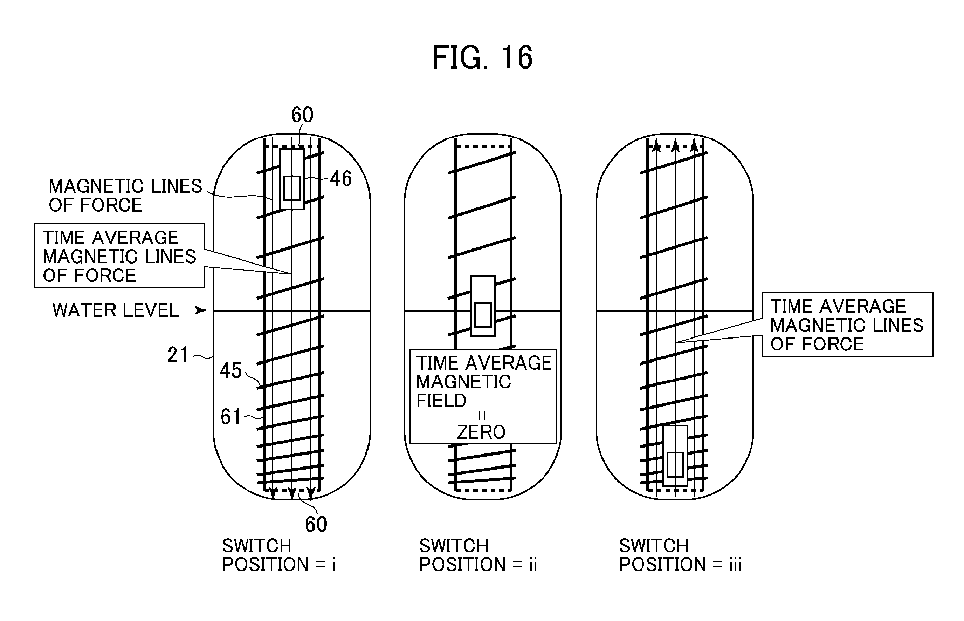

Fig. 16 illustrates movement of the float 46 when the water level measurement value for the tank 21 is calibrated.

Referring to Fig. 16, when the switch 108 is placed at position i to thereby superimpose a large positive direct current over the solenoid coil 45, the float 46 containing the magnet 48 in the fourth embodiment moves, for example, upwardly because of a magnetic field generated in the solenoid coil 45, stopping at the position of the upper stopper 60. It is here noted that a magnetic flux density on the inside of the solenoid coil 45 is a composition of a DC component and an AC component; however, the position of the float 46 containing the magnet 48 is determined by an average value of the composite current with respect to time as shown in Table 1 below.

[Table 1]

| Current flowing through solenoid coil and float position relative to switch position | | | | |
|---|---|---|---|---|
| No. | Switch position | Current flowing through solenoid coil | Current time average | Float position |
| 1 | i | Ia·√(2)·sin(2πft)+Id | +Id | Immediately below upper net |
| 2 | ii | Ia·√(2)·sin(2πft) | 0 | Same as tank water level |
| 3 | iii | Ia·√(2)·sin(2πft)-Id | -Id | Immediately above lower net |
| Note: t = time | | | | |

The water level measured at this time is recorded. The position at which the float 46 is stationary is known.

Next, the switch 108 is placed at position iii to thereby superimpose a large negative direct current over the solenoid coil 45. Then, the float 46 containing the magnet 48 moves downwardly because of the magnetic field generated in the solenoid coil 45 and stops at the position of the lower stopper 60. The water level measured at this time is recorded. The position at which the float 46 is stationary is known.

From the measurement values and the known lower limit and upper limit values of the measurement range, the relationship between the actual water level and the measured water level can be obtained using the linear expression of expression (9) shown below. The water level calibrator (1) 114 shown in Fig. 15 therefore performs such a correction calculation.

```
Measured water level after correction = {(measured

water level unprocessed data) – (lower limit measurement

value)} x {(upper limit known value) – (lower limit known

value)} ÷ {(upper limit measurement value) – (lower limit

measurement value)} + lower limit known value .. (9)
```

In the related-art water level measurement method, the actual water level in the tank 21 can be checked by, for example, radiography at the site during operation of the nuclear reactor 1. However, in actual applications, the high radiation environment to which the tank 21 is exposed hampers easy check of the actual water level, which makes calibration difficult.

In contrast, in the fourth embodiment of the present invention, the water level can be calibrated remotely.

Additionally, in the related-art water level measurement method, the water level needs to be calibrated at predetermined intervals because of secular change involved with the water level measurement system, which requires that a person go to the site in person.

The fourth embodiment, having no elements at the site (near the tank 21) that can develop secular change, eliminates such a need.

(Modified example of the fourth embodiment)

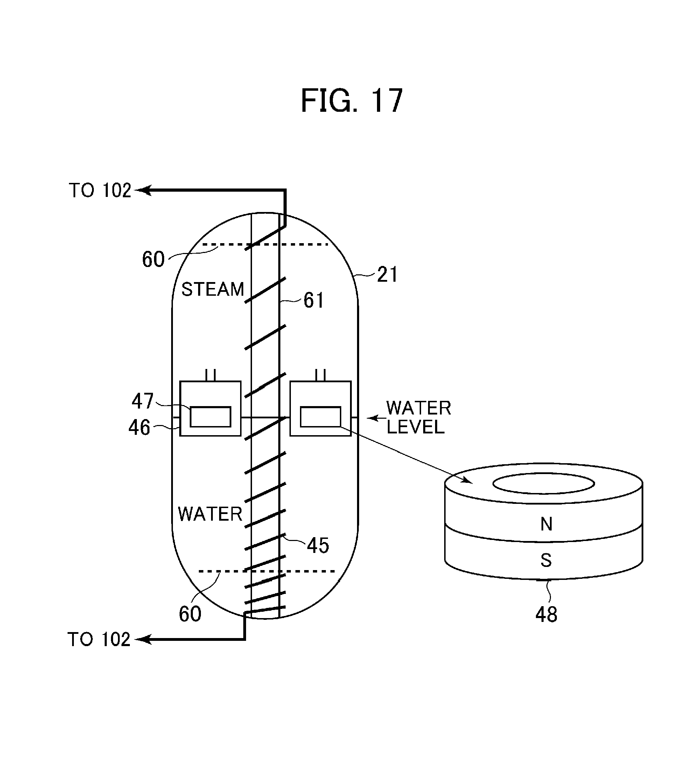

Fig. 17 illustrates a modified example of the fourth embodiment of the present invention, showing a water level calibrating stopper 60 employed for measurement of the water level in a tank 21 directly with a solenoid coil 45.

Referring to Fig. 17, the arrangement according to the modified example of the fourth embodiment includes a bobbin 61 disposed vertically in the tank 21 and a solenoid coil 45 is wound around the bobbin 61. The solenoid coil 45 is adapted to have inductance density, relative to a height direction, varying continuously in the height direction. A toroidally-shaped float 46 containing there inside a toroidally-shaped magnetic material 47 is disposed on an outside of the solenoid coil 45.

The arrangement further includes a stopper 60 that may, for example, be a net for limiting upward or downward movement of the float 46. The stopper 60 is disposed on an outside of each of an upper portion and a lower portion (near upper and lower limits of a water level measurement range) of the solenoid coil 45 and prevents the float 46 from moving further upward or downward of the stopper 60. The magnetic material 47 contained in the float 46 is magnetized (made to be a magnet). The magnetic pole pieces thereof are arranged vertically.

The foregoing arrangements allow the same effect to be achieved as with the solenoid coil 45 wound around the outside of the bobbin 61.

(Fifth embodiment)

A fifth embodiment of the present invention will be described below.

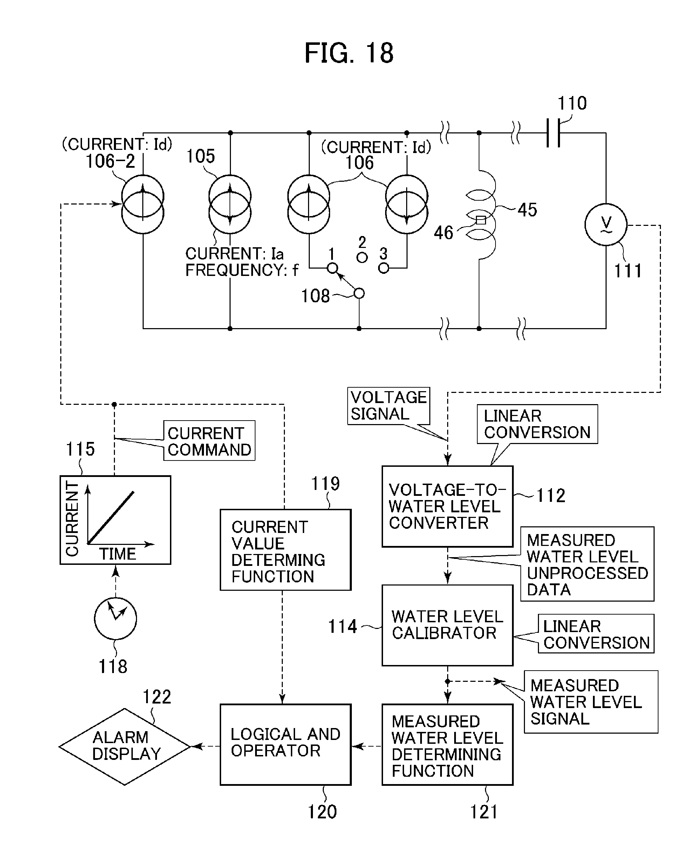

Fig. 18 illustrates a water level measurement circuit 101 according to the fifth embodiment of the present invention, including an inductance measurement circuit 102 that incorporates an AC constant current source 105, to which a function of determining magnetic charge is added. The fifth embodiment is otherwise arranged in the same manner as in the fourth embodiment.

Referring to Fig. 18, the water level measurement circuit 101 of the fifth embodiment includes the AC constant current source 105 of the water level measurement circuit of the fourth embodiment shown in Fig. 15, with which a DC constant current source 106-2 is connected in parallel.

A current command value generator 115 calculates a current command value to be given to the DC constant current source 106-2 and the current value varies with time. A relationship between time and current is, for example, linear.

The example shown in Fig. 18 further includes a timer 118, a current value determining functional section 119, a logical AND operator 120, a measured water level determining functional section 121, and a weak float magnet alarm display 122.

The current value determining functional section 119 functions to determine when the current is reaching its upper limit. The current value determining functional section 119 outputs an ON signal (e.g. a signal with a level of "1", not "0"), if the current command value from the current command value generator 115 exceeds a predetermined value. Current values at which the measurement range reaches a lower limit and an upper limit with a sufficient strength of a magnet 48 are set for the current value determining functional section 119.

The measured water level determining functional section 121 determines whether the measured water level falls within the measurement range. The measured water level determining functional section 121 outputs an ON signal when the measured water level falls within the measurement range.

The logical AND operator 120 is supplied with the output signal from the current value determining functional section 119 and the output signal from the measured water level determining functional section 121 and performs a logical AND operation on the two signals to output a result.

If the output signal from the logical AND operator 120 is ON, the weak float magnet alarm display 122 warns a system administrator that the float magnet strength falls short of a predetermined value.

A solenoid coil 45 and a float 46 in the fifth embodiment share the same structure and mounting method with those in the fourth embodiment. The solenoid coil 45 has inductance density relative to a height direction that decreases with an increasing height, as shown in Fig. 6.

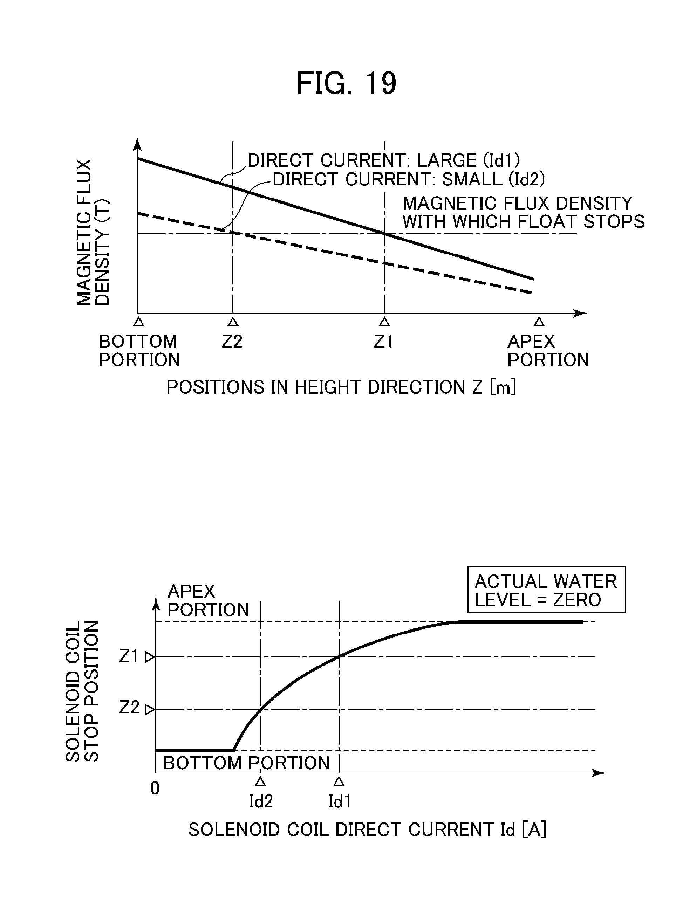

Fig. 19 is a graph showing magnetic flux density relative to a position of the solenoid coil 45 in the height direction and a graph showing a relationship between the direct current value of the solenoid coil 45 and the position at which the float 46 is stationary. In this case, it is assumed that water is removed from the tank 21 or the water level in the tank 21 is sufficiently low.

It is noted that the magnetic flux density (an average value with respect to time) on the inside of the solenoid coil 45 is proportional to the inductance density relative to the height direction. Thus, a magnetic flux density distribution on the inside of the solenoid coil 45 at the height direction position (Z) shows that the magnetic flux density (B) is lower at higher positions, as shown in the upper graph of Fig. 19 and the following expression (10).

$$B = (\gamma \times Z + \delta) \times Idc \; .. \; (10)$$

where, $\gamma$ and $\delta$ are proportionality coefficients and Idc is a value of current flowing through the solenoid coil 45.

Meanwhile, force (Fm) that the float 46 containing the magnet 48 receives from a magnetic field is proportional to the flux density thereof as expressed in the following expression (11).

$$Fm = m \times B \times K \; .. \; (11)$$

where, m is the magnetic pole strength of the magnet 48 and K is a coefficient determined by, for example, the shape of the magnet 48.

Buoyancy (Fb) that the float 46 receives is expressed by the following expression (12).

$$Fb = (\rho_g \times V_f - M_f) \times g \ .. \ (12)$$

where, $\rho_g$ is mass density of steam in the tank 21, $V_f$ is volume of the float 46, $M_f$ is mass of the float 46, and g is gravitational acceleration.

When the force received by the float 46 from the magnetic field balances the buoyancy of the float 46 (Fm + Fb = 0), the float 46 stops moving.

When the direct current flowing through the solenoid coil 45 varies continuously, therefore, the position at which the float 46 stops in the height direction is as expressed by the following expression (13) and shown by the lower graph of Fig. 19.

$$Z = -(\rho_g \times V_f - M_f) \times g \ / \ (m \times I_{dc} \times \gamma \times K) - \delta/\gamma \ .. \ (13)$$

When the magnet 48 has a sufficient strength, therefore, the magnet 48 moves from the lower limit of the measurement range (stopper 60) to reach the upper limit before stopping moving as the current value is made to increase. The water level measured also varies from the lower limit to the upper limit of the measurement range.

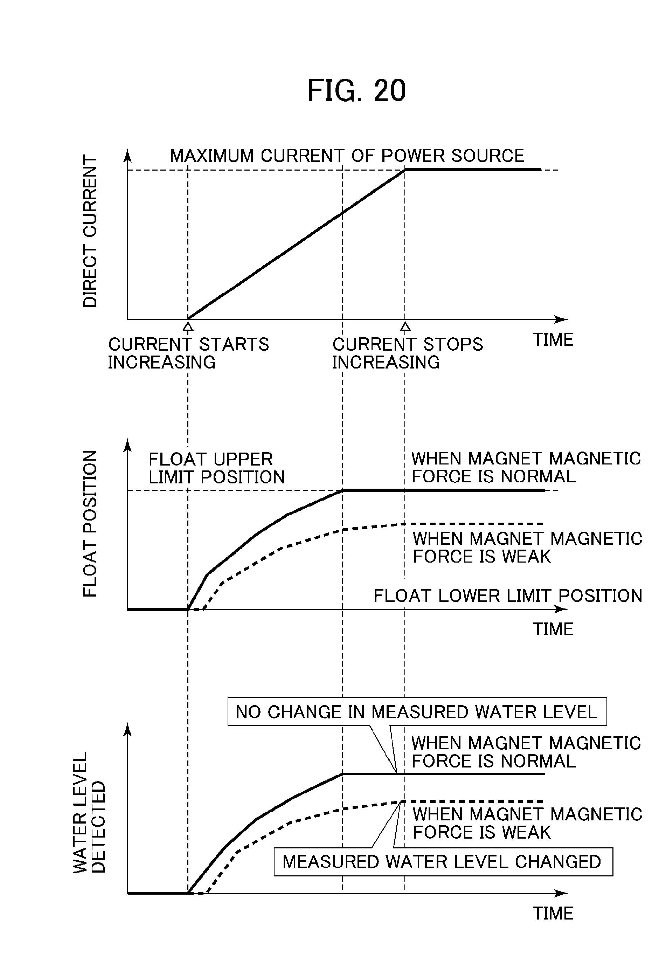

Fig. 20 shows graphs showing changes with time in the direct current to be superimposed over the solenoid coil 45, the position of the float 46, and the detected water level.

Referring to Fig. 20, when the strength of the magnet 48 is not sufficient, the position of the magnet 48 does not reach the upper limit of the measurement range unless the current is made larger than a normal value.

As a result, when the strength of the magnet 48 is not sufficient, the position of the magnet 48 and the water level measured continue going up until the current reaches the upper limit.

Therefore, if the water level measured continues changing at a point in time when the current value becomes greater than that when the strength of the magnet 48 is sufficient, it is automatically determined that the measured water level does not reach the upper limit or the lower limit.

As described above, in the fifth embodiment of the present invention, if it is known that the measurement value of the water level continues changing while the direct current is increased to the upper limit, it can automatically be known that the strength of the magnet 48 in the float 46 is weak enough to be replaced with a new one or to be magnetized.

(Sixth embodiment)

A sixth embodiment of the present invention will be described below.

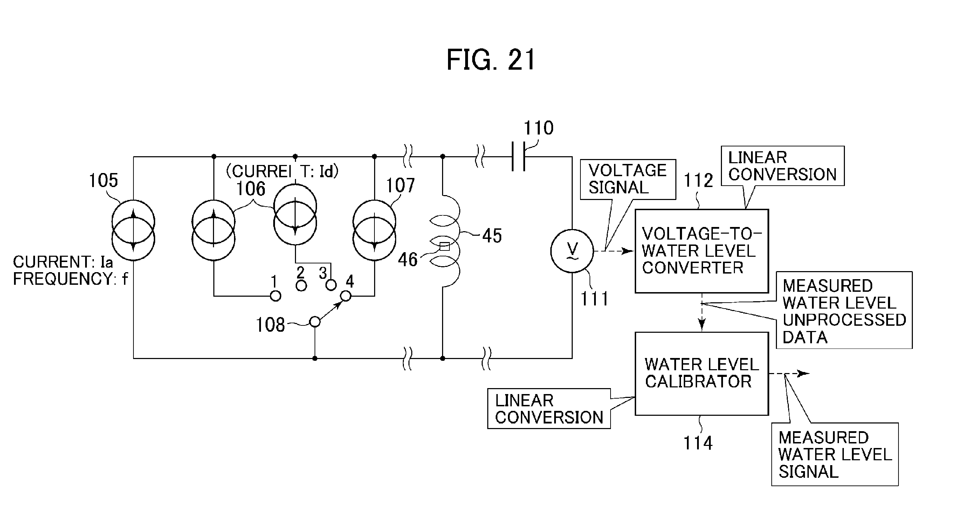

Fig. 21 illustrates an arrangement of a water level measurement circuit 101 according to the sixth embodiment of the present invention, in which a magnet magnetizing DC power source 107 is added to an inductance measurement circuit 102 that incorporates an AC constant current source 105 shown in Fig. 15. The magnet magnetizing DC power source 107 is connected in parallel with, or disconnected from, a DC constant current source 106 by a switch 108. The sixth embodiment is otherwise arranged in the same manner as in the fourth embodiment.

Referring to Fig. 21, the water level measurement circuit 101 according to the sixth embodiment is characterized in that, in addition to the AC constant current source 105 and the DC constant current source 106 found in the fourth embodiment, a large capacity DC constant current source 107 is connected in series and placing the switch 108 in position iv allows a large direct current to flow. The position of the switch 108 is changed by a corresponding command signal from the general operation controller 100 as described earlier.

In the sixth embodiment of the present invention, changing the position of the switch 108 such that the current from the large capacity DC constant current source 107 flows through a solenoid coil 45 generates a strong magnetic field inside the solenoid coil 45. As a result, if a magnetic material 47 is kept positioned inside the solenoid coil 45 for a predetermined period of time, the magnetic material 47 is magnetized, so that the strength of a magnet 48 can be brought back to a required level. This permits appropriate calibration of the water level gauge.

The predetermined period of time during which the magnetic material 47 is kept positioned inside the solenoid coil 45 can be set with, for example, a current value of the DC constant current source 107 (through, for example, experiments).

(Seventh embodiment)

A seventh embodiment of the present invention will be described below.

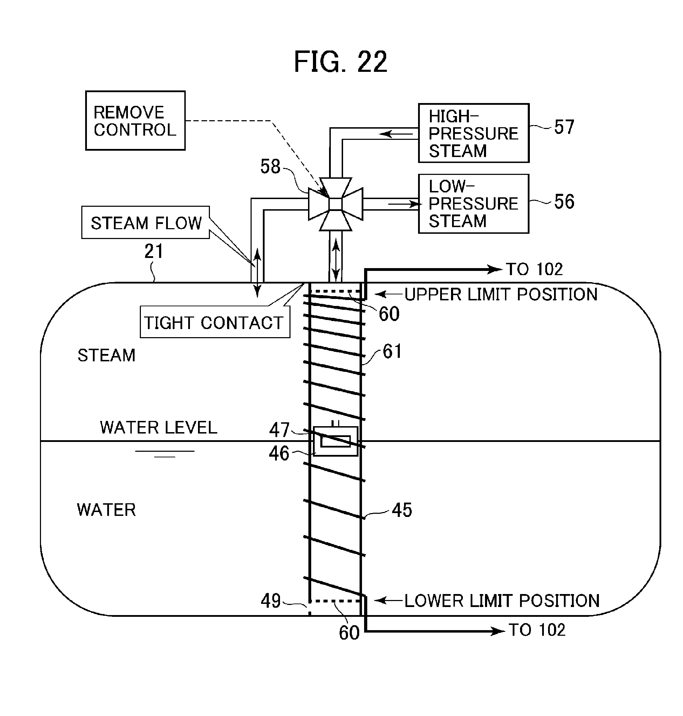

Fig. 22 illustrates a method for calibrating the measured water level in a tank 21 using steam pressure according to the seventh embodiment of the present invention.

Referring to Fig. 22, the tank 21 in the seventh embodiment includes a solenoid coil 45 of the third embodiment disposed there inside; however, a bobbin 61 has a venthole 49 only at a lower side thereof. Meanwhile, a top panel with which an upper end of the bobbin 61 contacts has a hole so that the bobbin 61 is brought into communication with a high-pressure steam source 57, a low-pressure steam source 56, and the tank 21 by a four-way reversing valve 58. This allows steam to be injected into, or discharged from, the bobbin 61. The general operation controller 100 controls to change the position of the four-way reversing valve 58.

The bobbin 61 incorporates a stopper 60 that may, for example, be a net for limiting upward or downward movement of a float 46. The stopper 60 is disposed at each of an upper portion and a lower portion (near upper and lower limits of a water level measurement range) and prevents the float 46 from moving further upward or downward of the stopper 60. The seventh embodiment shares the same water level measurement circuit with the third embodiment.

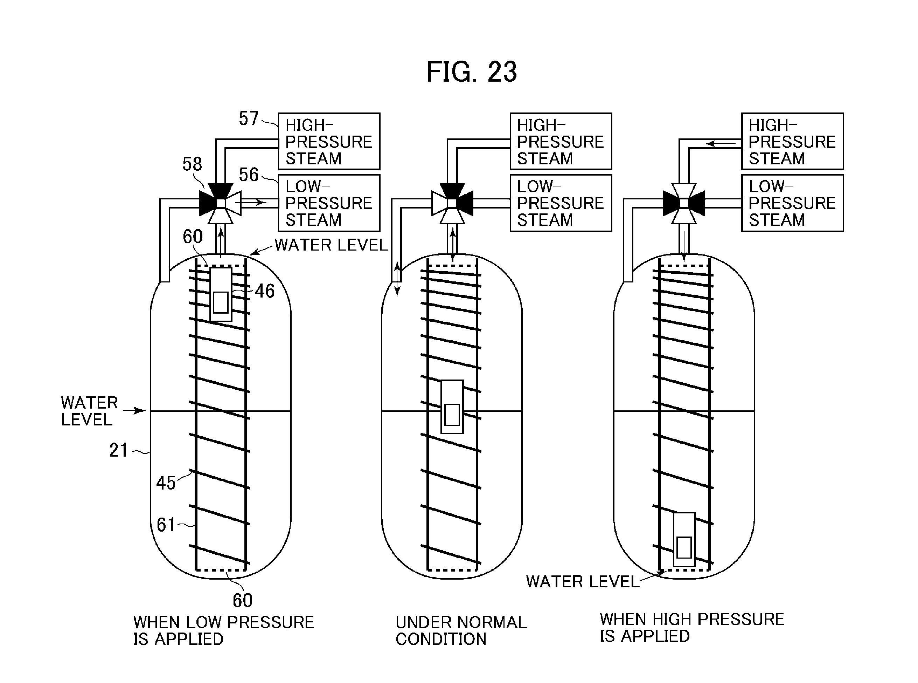

Fig. 23 illustrates movement of the float 46 in the method for calibrating the measured water level in the tank 21 using steam pressure in the seventh embodiment.

Referring to Fig. 23, in the seventh embodiment of the present invention, the four-way reversing valve 58 is operated, for example, remotely (operation with a command signal from the general operation controller 100) as a first step to thereby inject steam present in the high-pressure steam source 57 into the coil bobbin 61 (of symbols representing the four-way reversing valve 58, the solid black trapezoid denotes that fluid flow is blocked, while the blank trapezoid denotes that the fluid is allowed to flow through the four-way reversing valve 58).

Referring to the (first step) of Table 2 shown below, pressure of the steam in the bobbin 61 then increases and the water level and the float 46 go down; when steam is further injected, the float 46 stops at the lower limit position. The water level measured at this time is then recorded. It is noted that the position at which the float 46 is stationary is known.

[Table 2]

| Float positions relative to different connections of four-way reversing valve | | | | |
|---|---|---|---|---|
| Step | Four-way reversing valve connection | Pressure in coil bobbin | Water level in coil bobbin | Float position |
| First | High-pressure steam source | Higher than that in tank | Lower limit | Immediately above upper net |
| Second | Low-pressure steam source | Lower than that in tank | Upper limit | Immediately below lower net |
| - | Tank | Same as that in tank | Same as water level in tank | Same as water level in tank |

As a second step (in which a low pressure is applied), the four-way reversing valve 58 is operated to thereby discharge steam present in the coil bobbin 61 to the low-pressure steam source 56. Then, as shown in the second step of Table 2 above, the pressure of the steam inside the bobbin 61 decreases, so that the water level in the bobbin 61 and the float 46 go up. When the steam is further discharged, the float 46 stops at the upper limit position. The water level measured at this time is then recorded. It is noted that the position at which the float 46 is stationary is known.

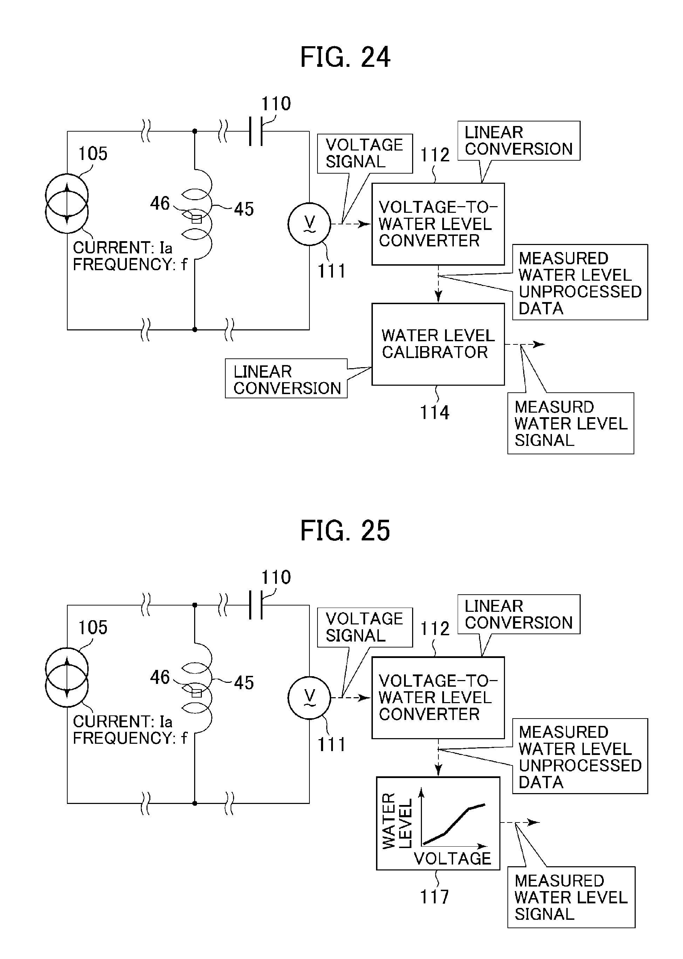

Fig. 24 illustrates a water level measurement circuit in the method for calibrating the measured water level in the tank using the steam pressure.

In the seventh embodiment, the relationship between the actual water level and the measured water level can be calculated with a linear expression as shown in the expression (9) from the measurement values and the known lower and upper limit values of the measurement range. Specifically, calibration can be performed remotely.

In the related-art water level measurement method, the actual water level in the tank 21 can be checked by, for example, radiography at the site during operation of the nuclear reactor 1. However, in actual applications, the high radiation environment to which the tank 21 is exposed hampers easy check of the actual water level, which makes calibration difficult.

In contrast, in the seventh embodiment of the present invention, the water level can be calibrated remotely.

Additionally, in the related-art water level measurement method, the water level needs to be calibrated at predetermined intervals because of secular change involved with the water level measurement system, which requires that a person go to the site in person. The seventh embodiment, having no elements at the site (near the tank 21) that can develop secular change, eliminates such a need.

(Eighth embodiment)

An eighth embodiment of the present invention will be described below.

Fig. 25 illustrates the eighth embodiment of the present invention in which a water level calibrator (2) 117 is added to a water level measurement circuit 101.

Referring to Fig. 25, the water level measurement circuit in the eighth embodiment of the present invention includes the water level calibrator (2) 117 that converts the terminal voltage of the solenoid coil 45 of the first to seventh embodiments into a corresponding water level. Measured water levels obtained by changing the position of the float 46 manually are recorded and an inverse function characteristic of the relationship there between (approximated with a polynomial or a broken line function) is set in the water level calibrator (2) 117.

The eighth embodiment of the present invention permits correction of a measurement error involved in a nonlinear characteristic occurring from turns density of the solenoid coil 45 or a magnetic permeability distribution there around, thus achieving improved measurement accuracy throughout the entire measurement range.

(Ninth embodiment)

A ninth embodiment of the present invention will be described below.

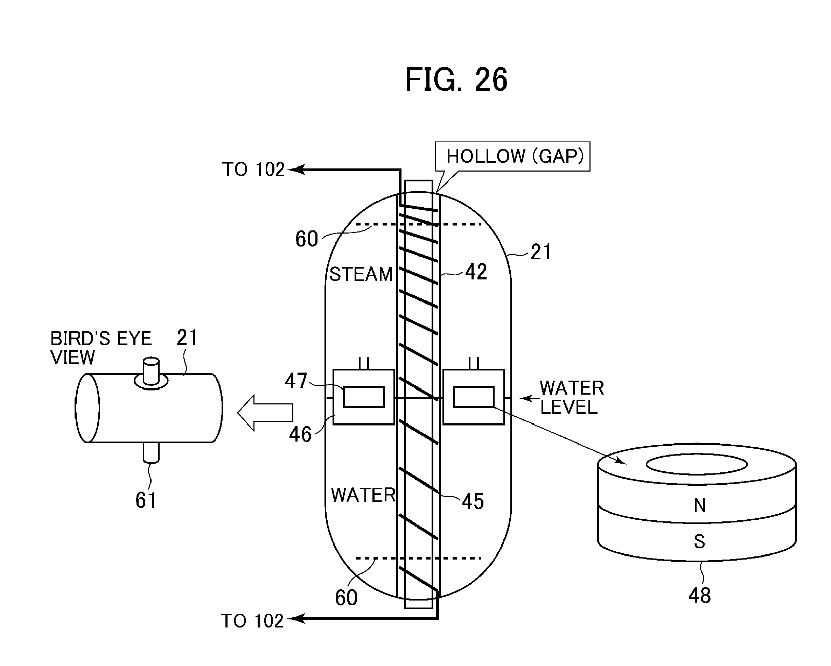

Fig. 26 illustrates a ninth embodiment of the present invention, illustrating a method for mounting a solenoid coil 45 on an outside, and near a center, of a tank 21.

Referring to Fig. 26, the tank 21 in the ninth embodiment includes a tube penetrating perpendicularly through a container (a balance tube 41 or the tank 21) and a solenoid coil 45 wound around a bobbin 61 is disposed inside the tube. A toroidally-shaped float 46 and a magnetic material 47 are disposed on an inside of the tube.

In the first to eighth embodiments of the present invention, the solenoid coil 45 is disposed on the inside of the tank 21 and a cable from the solenoid coil 45 is passed through a wall of the tank 21. As a result, there can be a water leak at the penetration.

In the ninth embodiment of the present invention, the solenoid coil 45 is disposed not on the inside, but on the outside of the balance tube 41 or the tank 21. This eliminates the need for water leakage prevention (seal) for the cable connecting between the solenoid coil 45 and means for measuring inductance.

The foregoing arrangement also allows the solenoid coil 45 to be removed and reinstalled easily for improved maintainability, when a wire of the solenoid coil 45 snaps off or specifications, such as the measurement range, need to be changed.

In the first through ninth embodiments of the present invention, in addition to the above-described advantages, faults relating to water level control in the tank 21 are less likely to occur. This enables stable supply of electricity without having to shut down the nuclear reactor 1 in operation in order to rectify the fault.

In the embodiments described heretofore, water is used as the fluid. The embodiments of the present invention are nonetheless applicable to a case in which another type of fluid, such as acid, alcohol, and a granulated substance is stored.

In the embodiments described above, the float having a magnetic material is disposed on the inside of the solenoid coil in some arrangements, and the toroidally-shaped magnetic material surrounds the solenoid coil in others. The present invention also encompasses an arrangement in which a float having a shape like the one shown Fig. 5 is disposed on the outside of, and near, the solenoid coil.

The present invention can achieve a fluid level measurement instrument requiring no detecting pipe that can accurately measure over a long period of time a fluid level in a tank for storing therein fluid without having to use a detecting pipe for sampling the fluid from the tank.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

**Claims**

1. A fluid level measurement instrument by using solenoid coil, comprising:

a float (46) disposed in a container for storing fluid, the float (46) containing a magnetic material (47) and having a specific gravity smaller than that of the fluid;
a solenoid coil (45) having inductance that varies according as the float (46) moves within the container; and
a fluid level measurement circuit (101) for measuring inductance of the solenoid coil (45) to thereby measure an upper surface position of the fluid in the container.

**2.** The fluid level measurement instrument by using solenoid coil according to claim 1, wherein:

the solenoid coil (45) is formed by being wound around an outer periphery of the container.

**3.** The fluid level measurement instrument by using solenoid coil according to claim 2, wherein:

the solenoid coil (45) has an increasing number of turns per unit length from an upper portion toward a lower portion of the container.

**4.** The fluid level measurement instrument by using solenoid coil according to claim 1, further comprising:

a bobbin (61) disposed inside the container, the bobbin (61) extending from an upper portion to a lower portion of the container, wherein:

the solenoid coil (45) is wound around the bobbin (61);
the magnetic material (47) is toroidally-shaped; and
the bobbin (61) wound with the solenoid coil (45) is inserted into a central portion of the toroidally-shaped magnetic material (47).

**5.** The fluid level measurement instrument by using solenoid coil according to claim 4, wherein:

the solenoid coil (45) has an increasing number of turns per unit length from the upper portion toward the lower portion of the container.

**6.** The fluid level measurement instrument by using solenoid coil according to claim 4 or 5, further comprising:

a stopper (60) disposed inside the container, the stopper (60) for limiting an upward movement and a downward movement of the float (46).

**7.** The fluid level measurement instrument by using solenoid coil according to claim 1, further comprising:

a cylindrical bobbin (61) disposed inside the container, the cylindrical bobbin (61) extending from an upper portion to a lower portion of the container, wherein:

the solenoid coil (45) is wound around the cylindrical bobbin (61); and
the float (46) is disposed inside the cylindrical bobbin (61).

**8.** The fluid level measurement instrument by using solenoid coil according to claim 7, wherein:

the solenoid coil (45) has an increasing number of turns per unit length from the upper portion toward the lower portion of the container.

**9.** The fluid level measurement instrument by using solenoid coil according to claim 7 or 8, further comprising:

a stopper (60) disposed inside the container, the stopper (60) for limiting an upward movement and a downward movement of the float (46).

**10.** The fluid level measurement instrument by using solenoid coil according to at least one of claims 1 to 9, wherein:

the fluid level measurement circuit (101) comprises:

a capacitor (109) and an oscillation circuit which are connected to the solenoid coil (45);
a frequency counter (104) for counting an output of the oscillation circuit;
an inductance calculation functional section for calculating inductance of the solenoid coil (45) based on the output of the frequency counter (104); and
a converting section for converting an output of the inductance calculation functional section into a corresponding upper surface position of the fluid.

**11.** The fluid level measurement instrument by using solenoid coil according to at least one of claims 1 to 9, wherein:

the fluid level measurement circuit (101) comprises:

an AC constant current source (105) connected to the solenoid coil (45);
a voltmeter (111) for measuring a terminal voltage of the solenoid coil (45); and
a converting section for converting a voltage measurement value of the voltmeter (111) into a corresponding upper surface position of the fluid in the container.

**12.** The fluid level measurement instrument by using solenoid coil according to claim 11, further comprising:

an upper limit stopper (60) and a lower limit stopper (60) which are disposed inside the container, the upper limit stopper (60) and the lower limit stopper (60) for limiting an upward movement and a downward movement, respectively, of the float (46);
a DC constant current source (106) connected in parallel with the AC constant current source (105) and the solenoid coil (45);
a general operation controller (100) for causing the DC constant current source (106) to pass a positive current and a negative current through the solenoid coil (45) to thereby move the float (46) to, and stop at, a position of the upper limit stopper (60) or the lower limit stopper (60) using a magnetic field generated in the solenoid coil (45); and
a calibrator (114) for calibrating the upper surface position of the fluid being measured, from fluid upper surface positions as converted by the converting section, the fluid upper surface positions being the positions of the float (46) stopped by the upper limit stopper (60) and the lower limit stopper (60).

**13.** The fluid level measurement instrument by using solenoid coil according to claim 12, wherein:

the general operation controller (100) determines that a magnetic force of the magnetic material (47) is insufficient when detecting that, by changing the current of the DC constant current source (106) linearly with time until the current reaches a maximum current value thereof, the upper surface position of the fluid measured based on the position of the float (46) changes with time.

**14.** The fluid level measurement instrument by using solenoid coil according to claim 12 or 13, wherein:

the general operation controller (100) causes the DC constant current source (106) to pass current through the solenoid coil (45) to thereby generate a strong magnetic field inside and outside the solenoid coil (45), thereby allowing the magnetic material (47) to recover its magnetic strength.

**15.** The fluid level measurement instrument by using solenoid coil according to claim 11, further comprising:

a high-pressure steam source (57);
a low-pressure steam source (56);
a selector valve for selecting to connect either one of the high-pressure steam source (57) and the low-pressure steam source (56) to an upper end of a totally-closed bobbin (61) to which the solenoid coil (45) is fixed;
an upper limit stopper (60) and a lower limit stopper (60) which are disposed inside the container, the upper limit stopper (60) and the lower limit stopper (60) for limiting an upward movement and a downward movement, respectively, of the float (46);
a general operation controller (100) for connecting the high-pressure steam source (57) to the upper end of the totally-closed bobbin (61) via the selector valve to thereby move the float (46) to a position of the lower limit stopper (60), and connecting the low-pressure steam source (56) to the upper end of the totally-closed bobbin (61) via the selector valve to thereby move the float to a position of the upper limit stopper (60); and
a calibrator (114; 117) for calibrating the upper surface position of the fluid being measured, from fluid upper surface positions as converted by the converting section, the fluid upper surface positions being the positions of the float (46) stopped by the upper limit stopper (60) and the lower limit stopper (60).

**16.** The fluid level measurement instrument by using solenoid coil according to claim 11, further comprising:

a calibrator (114; 117) for correcting a measurement error of a nonlinear characteristic of the upper surface position as converted by the converting section.

17. The fluid level measurement instrument by using solenoid coil according to claim 1, further comprising:

a bobbin (61) disposed in a hollow portion formed at a central portion of the container, the hollow portion extending from an upper portion to a lower portion of the container, the bobbin (61) extending from the upper portion to the lower portion of the container, wherein:

the solenoid coil (45) is wound around the bobbin (61);
the magnetic material (47) is toroidally-shaped; and
the bobbin (61) wound with the solenoid coil (45) is disposed at a central portion of the toroidally-shaped magnetic material (47).

# FIG. 1

STEAM

STEAM FLOW →

WATER LEVEL ←

FEED-WATER FLOW ←

WATER

EXTRACTED STEAM FLOW ←

G

FEED-WATER HEATER

CONDENSATE WATER FLOW →

EP 2 508 853 A1

# FIG. 2

EXTRACTED STEAM FLOW
(FROM TURBINE 3)

21

STEAM

26

25-1

FEED-WATER FLOW

← FEED-WATER FLOW ←

WATER LEVEL →

FEED-WATER FLOW →

WATER

FEED-WATER FLOW →

25-2

MEASURED WATER
LEVEL SIGNAL

WATE
LEVEL
CONTROL
UNIT

27

28

CONDENSATE WATER FLOW
(TO CONDENSER 5)

EP 2 508 853 A1

# FIG. 3

FROM TURBINE 3

21

54

STEAM

41

HIGH TEMPERATURE    STEAM

STEAM

44    43

WATER LEVEL

55

ΔP

53

RADIOACTIVE MATERIAL    WATER

WATER

44    53

TO CONDENSER 5

WATER

43

54

MEASURED WATER LEVEL

5～10m

TO CONTROL SYSTEM OR THE LIKE

EP 2 508 853 A1

# FIG. 4

# FIG. 5

OUTSIDE BALANCE TUBE

INSIDE BALANCE TUBE

# FIG. 6

INDUCTANCE DENSITY $\rho$ (H/m)

NO FLOAT

BOTTOM PORTION

APEX PORTION

POSITION IN HEIGHT DIRECTION Z [m]

# FIG. 7

INDUCTANCE L (H)

BOTTOM PORTION

APEX PORTION

FLOAT POSITION IN HEIGHT DIRECTION Zf [m]

# FIG. 8

HOT SIDE

109:C

46

45:L     COLD SIDE

103

OSCILLATOR

ELECTRIC
SIGNAL

104

FREQUENCY
COUNTER

CAPACITANCE
VALUE

C

FREQUENCY f

INDUCTANCE L

INDUCTANCE
ARITHMETIC
UNIT

116

$$L = \frac{1}{C \cdot (2\pi f)^2}$$

MEASURED WATER
LEVEL SIGNAL

INDUCTANCE-T
O-WATER LEVEL
CONVERTER

113

LINEAR
CONVERSION

EP 2 508 853 A1

# FIG. 9

TO 102 ←

STEAM

WATER

54

41

61

62

47

46

62

59

WATER
LEVEL

45

47

TO 102 ←

54

# FIG. 10

21

TO 102

STEAM

WATER LEVEL 47
46

WATER

49

49

61

45

TO 102

# FIG. 11

21

TO 102

STEAM

61

WATER LEVEL 47

46

47

WATER

45

TO 102

# FIG. 12

105

CURRENT: Ia
FREQUENCY: f

46    45

V    111

VOLTAGE
SIGNAL

MEASURED
WATER LEVEL
SIGNAL

VOLTAGE-TO-
WATER LEVEL
CONVERTER

112

LINEAR
CONVERSION

# FIG. 13

21

TO 102 ← 49

TIGHT CONTACT ← UPPER LIMIT POSITION

60

STEAM    61

WATER LEVEL    47

46

WATER

45

49 ← LOWER LIMIT POSITION

TO 102 ← 60

# FIG. 14

# FIG. 15

FIG. 16

# FIG. 17

TO 102

60

STEAM

61

21

47

46

WATER LEVEL

WATER

45

60

TO 102

N

S

48

# FIG. 18

# FIG. 19

DIRECT CURRENT: LARGE (Id1)
DIRECT CURRENT: SMALL (Id2)
MAGNETIC FLUX DENSITY WITH WHICH FLOAT STOPS

MAGNETIC FLUX DENSITY (T)

BOTTOM PORTION    Z2    Z1    APEX PORTION

POSITIONS IN HEIGHT DIRECTION Z [m]

ACTUAL WATER LEVEL = ZERO

APEX PORTION

SOLENOID COIL STOP POSITION

Z1

Z2

BOTTOM PORTION

0    Id2    Id1

SOLENOID COIL DIRECT CURRENT Id [A]

# FIG. 20

# FIG. 21

# FIG. 22

# FIG. 23

57 — HIGH-PRESSURE STEAM

58

56 — LOW-PRESSURE STEAM

60

46

WATER LEVEL

WATER LEVEL

21

45

61

60

WHEN LOW PRESSURE IS APPLIED

HIGH-PRESSURE STEAM

LOW-PRESSURE STEAM

UNDER NORMAL CONDITION

HIGH-PRESSURE STEAM

LOW-PRESSURE STEAM

WATER LEVEL

WHEN HIGH PRESSURE IS APPLIED

EP 2 508 853 A1

# FIG. 24

# FIG. 25

# FIG. 26

EP 2 508 853 A1

**EUROPEAN SEARCH REPORT**

Application Number

EP 12 16 3186

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 289 731 B1 (LO JUI-YANG [TW]) 18 September 2001 (2001-09-18) * column 2, line 50 - column 3, line 9; figures 2-4 * | 1,7-9, 11-17 | INV. G01F23/72 G01F25/00 |
| X | GB 1 414 308 A (PLESSEY CO LTD) 19 November 1975 (1975-11-19) * page 1; figures 1,2 * | 1-3,10 | |
| X | EP 2 278 282 A1 (HAMILTON SUNDSTRAND CORP [US]) 26 January 2011 (2011-01-26) * paragraph [0010] - paragraph [0013]; figures 1,2 * * paragraph [0022] * | 1,4-6 | |
| X | US 2001/054312 A1 (CZARNEK ROBERT [US]) 27 December 2001 (2001-12-27) * paragraph [0058] - paragraph [0061]; figure 2 * * paragraphs [0064], [0070]; figure 4 * | 1,4,5,7, 8 | |
| A | FR 820 993 A (MONOPLAQUE) 24 November 1937 (1937-11-24) * page 2, line 23 - line 49; figure 4 * | 3,5,8 | TECHNICAL FIELDS SEARCHED (IPC) G01F |
| A | DE 94 13 499 U1 (URICH MANFRED [DE]) 27 October 1994 (1994-10-27) * pages 6,7 * | 12-14 | |
| A | US 4 321 590 A (ISHIKAWA MASAKAZU ET AL) 23 March 1982 (1982-03-23) * column 2, line 12 - line 50 * | 15 | |

The present search report has been drawn up for all claims

| Place of search | Date of completion of the search | Examiner |
|---|---|---|
| The Hague | 3 August 2012 | Bourhis, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 16 3186

This annex lists the patent family members relating to the patent documents cited in the above-mentioned European search report.
The members are as contained in the European Patent Office EDP file on
The European Patent Office is in no way liable for these particulars which are merely given for the purpose of information.

03-08-2012

| Patent document cited in search report | | Publication date | Patent family member(s) | | Publication date |
|---|---|---|---|---|---|
| US 6289731 | B1 | 18-09-2001 | NONE | | |
| GB 1414308 | A | 19-11-1975 | NONE | | |
| EP 2278282 | A1 | 26-01-2011 | EP 2278282 | A1 | 26-01-2011 |
| | | | US 2011012592 | A1 | 20-01-2011 |
| US 2001054312 | A1 | 27-12-2001 | NONE | | |
| FR 820993 | A | 24-11-1937 | NONE | | |
| DE 9413499 | U1 | 27-10-1994 | DE 9413499 | U1 | 27-10-1994 |
| | | | EP 0698784 | A2 | 28-02-1996 |
| | | | US 5621393 | A | 15-04-1997 |
| US 4321590 | A | 23-03-1982 | JP 56027628 | U | 14-03-1981 |
| | | | JP 58036988 | Y2 | 20-08-1983 |
| | | | SE 8005589 | A | 09-02-1981 |
| | | | US 4321590 | A | 23-03-1982 |

EPO FORM P0459

For more details about this annex : see Official Journal of the European Patent Office, No. 12/82

**REFERENCES CITED IN THE DESCRIPTION**

**Patent documents cited in the description**

- JP 2000227203 A